Europäisches Patentamt

European Patent Office

Office européen des brevets

(11) Publication number: **0 359 870**
**A1**

## EUROPEAN PATENT APPLICATION

(21) Application number: 88201923.5

(22) Date of filing: 23.09.88

(51) Int. Cl.⁵: **B65G 13/00 , B65G 13/12 , B60P 1/52**

(43) Date of publication of application:
**28.03.90 Bulletin 90/13**

(84) Designated Contracting States:
**BE DE FR GB NL SE**

(71) Applicant: **ANCRA INTERNATIONAL CORPORATION**
**4880 West Rosecrans Avenue**
**Hawthorne California 90250(US)**

(72) Inventor: **Thunnissen, Kees Wim**
**Boslaan 50**
**NL-5691 CX Son(NL)**

(74) Representative: **Boelsma, Gerben Harm, Ir. et al**
**Octrooibureau Polak & Charlouis Laan**
**Copes van Cattenburch 80**
**NL-2585 GD Den Haag(NL)**

(54) **Roller track.**

(57) A roller track comprising a series of rollers having their axes positioned mutually parallel and transverse to the longitudinal direction of the series, said rollers being rotatably journalled in an elongated carrier (13) which is received in a channel (1) or U-section which is closable at its open upper side by a cover plate (11) which may be secured to the upper edges of the section flanges, the carrier (13) with rollers being movable vertically between a lower position in which the rollers are completely sunk in the housing and an upper or operative position in which the rollers extend by a fraction of their diameter through corresponding apertures in the cover plate, the latter position being upwardly limited in that at both sides of the carrier portions of said carrier abut from below against inwardly projecting flange portions of the channel section. At least one of the upright flanges of the channel section comprises an outer portion (3a) being fixedly connected with the channel web and an inner portion (3b), normally in engagement with the outer portion from the inside thereof and being coupled therewith in the vertical direction, said inner portion comprising said inwardly projecting flange portion, the construction being such, that the inner portion may, in the lowermost position of the roller carrier and with the cover plate removed, inwardly tilted about its lower edge supported in the corner between the outer portion and the channel web so that said portion will become disconnected from the outer portion and thus may be removed.

FIG. 1

## Roller track.

The invention relates to a roller track comprising a series of rollers having their axes positioned mutually parallel and transverse to the longitudinal direction of the series, said rollers being rotatably journalled in an elongated carrier which is received in a channel or U-section which is closable at its open upper side by a cover plate which may be secured to the upper edges of the section flanges, the carrier with rollers being movable vertically between a lower position in which the rollers are completely sunk in the housing and an upper or operative position in which the rollers extend by a fraction of their diameter through corresponding apertures in the cover plate, the latter position being upwardly limited in that at both sides of the carrier portions of said carrier abut from below against inwardly projecting flange portions of the channel section.

Such roller tracks are known and are applied a.o. in loading floors of e.g. trucks adapted for container transport. Therein the roller carrier is generally constituted by an inner channel section supported by one or more inflatable air hoses extending in the longitudinal direction along the bottom or web of the outer channel section, while the projections are formed by wings which are outwardly directed from the upright flanges of the inner section, said wings being pushed, when the air hoses are inflated, against the lower surfaces of the enlargements of the flange edges of the outer channel section, which at least in the transverse direction is integral.

A disadvantage of said known roller track is that the insertion and removal respectively of the roller carrier into and from the outer channel section must take place from a longitudinal end of the outer channel section. Therewith it has to be taken into account that the roller tracks generally have a length of many meters and that the roller carrier generally is assembled from a (large) number of short sections; if in such a case a roller carrier section has to be removed for repair or replacement, usually many if not all sections have to be slid in the longitudinal direction from the end of the outer channel section.

The invention aims at removing this disadvantage and this without deteriorating the stability of the rollers in their operative positions, which is obtained through the cooperation between the carrier projections and the flange enlargements.

This aim is achieved according to the invention in that at least one of the upright flanges of the channel section comprises an outer portion being fixedly connected with the channel web and an inner portion, normally in engagement with the outer portion from the inside thereof and being coupled therewith in the vertical direction, said inner portion comprising said inwardly projecting flange portion, the construction being such, that the inner portion may, in the lowermost position of the roller carrier and with the cover plate removed, inwardly tilted about its lower edge supported in the corner between the outer portion and the channel web so that said portion will become disconnected from the outer portion and thus may be removed.

Upon removal of the cover plate and said inner upright flange portion, the roller carrier section which is to be repaired or replaced respectively, may be readily removed vertically from the channel section, while the remaining sections of the roller carrier may be left in place.

Preferably the inner portion of the upright flange engages with its lower edge in a groove formed in the channel web beside the outer portion of the upright flange, the inner portion being beveled at its outer side from a point at some distance over the lower edge towards said lower edge.

The invention is further explained below with reference to the drawing of an embodiment given as an example.

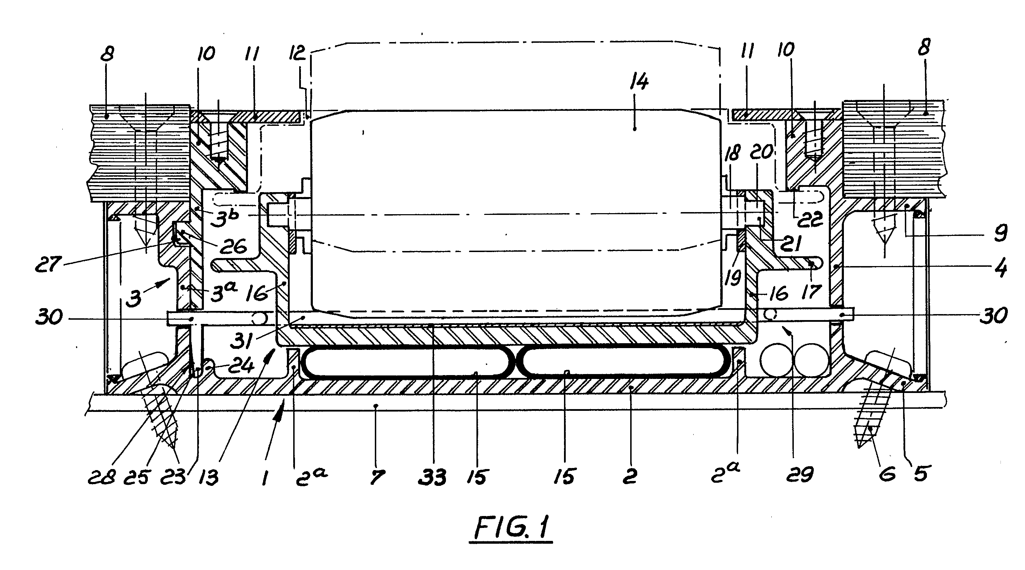

Fig. 1 shows a transverse section through the roller track according to the invention; and

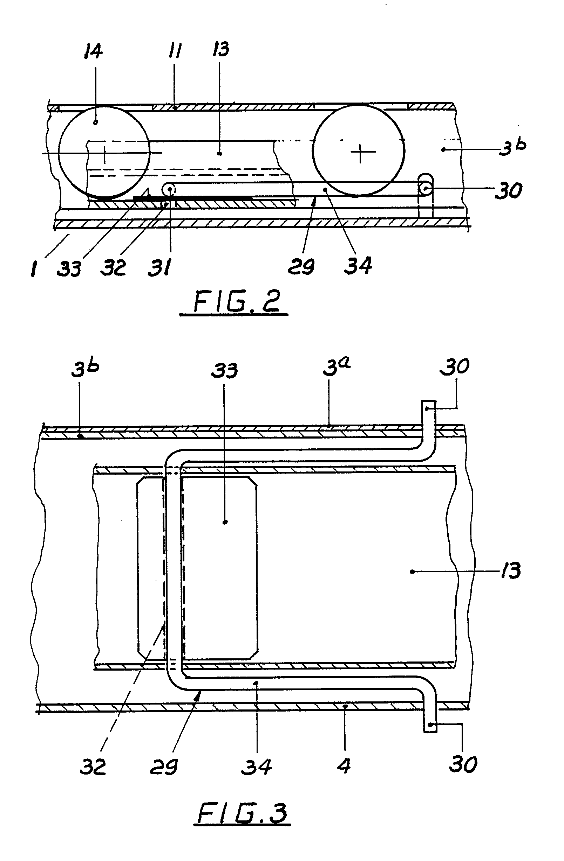

fig. 2 and 3 respectively show a vertical and a horizontal longitudinal section of the roller track.

Reference number 1 denotes an outer channel section having a generally U-shaped cross-section with a section web or bottom 2 and upright flanges 3 and 4. The channel section is secured through laterally directed mounting flanges 5 and screws 6 to the lower structure 7 of e.g. the loading floor of a truck adapted for container transport. The wooden parts 8 of the loading floor proper are supported by supporting flanges 9 which extend laterally from the upright section flanges 3 and 4 respectively. The upright flanges 3 and 4 have inward enlargements at their upper edges 10. The channel section 1 is at its upper side provided with a cover plate 11 which is secured through screws on the enlarged edges 10 and provided with a series of rectangular apertures 12 for (partially) passing the rollers which will be described below.

A carrier 13 for the rollers 14 and substantially in the shape of a U- or channel section is received in the channel section 1. The carrier 13 is supported by two air hoses 15 provided on the bottom 2 of the channel section, which are laterally enclosed between two ribs 2a. The upright flanges 16 of the carrier 13 have outwardly directed abutment ledges 17. The shafts 18 of the rollers 14 are mutually connected by coupling strips 19 which therefore are provided with holes at the desired pitch corresponding to the pitch of the apertures 12 in the cover plate 11. The shaft ends 20 are laterally flattened and received in longitudinal grooves 21 provided in the inner surface of the upright flanges 16.

The drawing shows the roller track with the roller carrier 13 in its lowermost position in which the rollers 14 are completely sunk with reference to the upper surface of the loading floor. By inflating the air hoses in known manner, however, the carrier 13 may be placed in an upper end position in which the rollers 14 extend some distance through the apertures in the cover plate 11 to beyond the level of the loading floor. In this position a load, particularly a container, may be easily moved along the loading floor. Said upper end position is limited in that the abutment ledges 17 abut the lower surfaces of the flange edge enlargements 10 which serve as the abutment surfaces 22. In order to permit removal of the carrier 13 with the rollers 14, when the cover plate 14 has been removed, in the vertical direction, e.g. for repair, replacement or inspection, in the embodiment shown one of the upright flanges 3 of the channel section 1 has two parts or portions 3a and 3b. The outer portion 3a is integral with the channel bottom or web 2 and the relative supporting flange 9, whereas the inner portion 3b contains the enlargement 10 and removably engages the outer portion 3a. The inner portion 3b engages with its lower edge 23 in a groove 25 formed between the fixed upstanding flange portion 3a and a ridge 24 extending upwardly from the bottom 2. In the operative position shown in the drawing the inner portion 3b engages with a nose 26 in a coresponding recess 27 of the outer portion 3a so that both portions are vertically coupled. Therewith the cover plate 11 keeps the flange portion 3b in its vertical position. Furthermore the inner flange portion 3b is somewhat beveled at the lower edge of its outer surface, at 28. Thereby the flange portion is permitted to tilt somewhat inwardly, after the cover plate 11 has been removed, so that it is disengaged from the outer flange portion 3a and thereafter may be taken from the channel section 1. Thereby the necessary clearance in the transverse direction is obtained for removing the carrier 13 from the section 1 in thevertical direction.

The channel section 1 as shown is characterized by a relatively large torsional rigidity and may be fabricated in relatively simple manner as an extruded aluminum section in length of e.g. 12 m. The carrier section 13 and if provided the inner flange portion 3b are preferably constructed in shorter sections.

Furthermore the roller carrier 13 is locked in a special manner against undesirable shifting in the longitudinal direction relative to the channel section 1, namely such that the above described removal of the carrier is not essentially interfered with thereby.

The locking means is constituted by a generally -shaped bracked or brace 29. The ends 30 thereof are journalled as fulcrums in corresponding apertures in the upright flanges 3, 4 of the channel section 1, the inner flange portion 3b having at the position of the relative bracket end a vertical slot in connection with the described vertical removability. The web 31 of the bracket is engaged with the carrier section through a transverse slot 32 in the web of the carrier section 13 and is kept in its operative position by a small sheet 33 entered between the lower side of the bracket web and the upper side of the channel web.

The points of engagement of the bracket 29 with the channel section 1 and the carrier section are chosen such that the legs 34 of the bracket in the average take a generally horizontal position.

It will be clear that after removal of the locking sheet 33 the carrier section may be taken from the .channel section in the above described manner.

## Claims

1. A roller track comprising a series of rollers having their axes positioned mutually parallel and transverse to the longitudinal direction of the series, said rollers being rotatably journalled in an elongated carrier which is received in a channel or U-section which is closable at its open upper side by a cover plate which may be secured to the upper edges of the section flanges, the carrier with rollers being movable vertically between a lower position in which the rollers are completely sunk in the housing and an upper or operative position in which the rollers extend by a fraction of their diameter through corresponding apertures in the cover plate, the latter position being upwardly limited in that at both sides of the carrier portions of said carrier abut from below against inwardly projecting flange portions of the channel section, characterized in that at least one of the upright flanges of the channel section comprises an outer portion being fixedly connected with the channel web and an inner portion, normally in engagement with the outer portion from the inside thereof and being coupled therewith in the vertical direction, said inner portion comprising said inwardly projecting flange portion, the construction being such, that the inner portion may, in the lowermost position of the roller carrier and with the cover plate removed, inwardly tilted about its lower edge supported in the corner between the outer portion and the channel web so that said portion will become disconnected from the outer portion and thus may be removed.

2. A roller track according to claim 1, characterized in that the inner portion of the upright flange engages with its lower edge a groove formed in the channel bottom beside the outer portion of the upright flange.

3. A roller track according to claim 2, characterized in that the inner portion of the upright flange is beveled at its outer surface from a position at some distance over its lower edge towards that lower edge.

4. A roller track according to claims 1 to 3, characterized in that the outer portion and the inner portion of the upright flange are provided with mutually corresponding noses and recesses at their facing lateral surfaces.

FIG.1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 002 106 (HYDRAROLL) <br> * Figure 1 * <br> --- | 1 | B 65 G 13/00 <br> B 65 G 13/12 <br> B 60 P 1/52 |
| A | EP-A-0 103 999 (PACKAGE CONTROL) <br> ----- | | |

TECHNICAL FIELDS SEARCHED (Int. Cl.4)

B 60 P
B 65 G

The present search report has been drawn up for all claims

| Place of search | Date of completion of the search | Examiner |
|---|---|---|
| THE HAGUE | 02-05-1989 | OSTYN T.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................
& : member of the same patent family, corresponding document

EPO FORM 1503 03.82 (P0401)